# FASCICULE DE BREVET EUROPEEN

(11) **EP 4 121 271 B1**
(45) Date de publication et mention de la délivrance du brevet: **30.04.2025**
(21) Numéro de dépôt: 21709726.0
(22) Date de dépôt: 10.03.2021
(51) Int. Cl.: B29C 49/48, B29C 49/12, B29C 49/78

(54) **DISPOSITIF ET PROCÉDÉ POUR LA FABRICATION D'UN RECIPIENT PAR SOUFFLAGE OU ETIRAGE-SOUFFLAGE**
VORRICHTUNG UND VERFAHREN ZUR HERSTELLUNG EINES BEHÄLTERS DURCH BLASFORMEN ODER STRECKBLASFORMEN
DEVICE AND METHOD FOR MANUFACTURING A CONTAINER BY MEANS OF BLOW MOULDING OR STRETCH BLOW MOULDING

(30) Priorité: 18.03.2020 FR 2002643
(43) Date de publication de la demande: 25.01.2023
(73) Titulaire: Sidel Participations, 76930 Octeville-sur-Mer (FR)
(72) Inventeur: CHOMEL, Nicolas, 76930 Octeville-sur-Mer (FR); LECOMTE, Frédéric, 76930 Octeville-sur-Mer (FR)
(74) Mandataire: Sidel Group
(86) Numéro de dépôt international: PCT/EP2021/056009
(87) Numéro de publication internationale: WO 2021/185647

(56) Documents cités:
- EP-B1- 2 803 469
- EP-B1- 3 319 780
- CH-A- 534 044
- FR-A1- 2 659 265

## Description

Le domaine de l'invention est celui de la fabrication de récipients par soufflage ou étirage-soufflage à partir d'une ébauche en matière plastique.

L'invention concerne plus particulièrement la fabrication de récipients par soufflage ou étirage-soufflage à l'aide d'un dispositif comprenant un moule comprenant deux demi-moules, et des moyens de compensation pneumatiques d'une pression de soufflage à l'intérieur du moule.

Il est connu de fabriquer des récipients, notamment des bouteilles, par soufflage ou étirage-soufflage à partir d'une ébauche en matière plastique. Une ébauche correspond à une préforme ou à une forme intermédiaire entre la préforme et le récipient final.

Pour ce faire, des ébauches sont portées dans un poste de conditionnement thermique à une température de transition vitreuse telle qu'elles puissent être déformées. Les ébauches chaudes sont ensuite transférées dans un moule, comprenant des demi-moules assemblés, où elles sont « soufflées » ou « étirées et soufflées ». Le soufflage est réalisé au moyen d'un fluide gazeux sous pression, en général de l'air.

Les pressions mises en jeu lors du soufflage atteignent fréquemment 40 bars. Il en résulte que lors de la fabrication d'un récipient d'une contenance de 1,5 l, qui a une surface projetée de 250 cm2 environ, une force de l'ordre de 9 800 daN tend à séparer les deux demi-moules assemblés qui constituent le moule de soufflage.

Un dispositif classique comprend :
- un moule comprenant un premier demi-moule et un deuxième demi-moule qui définissent ensemble l'empreinte du récipient à former ;
- un support pour chaque demi-moule, chaque support portant l'un des demi-moules.

Malgré tout le soin apporté à la réalisation des demi-moules et de leur support, sous l'action de la force engendrée par la pression du fluide de soufflage, les deux demi-moules s'écartent l'un de l'autre et un décalage de quelques dixièmes de millimètres peut apparaitre au plan de joint des demi-moules.

Un plan de joint présentant un décalage d'un dixième de millimètre a pour conséquence que le récipient formé présente une mauvaise qualité visuelle.

En d'autres termes, bien que la résistance structurelle du récipient soit intacte, le décalage induit par la pression de soufflage au niveau du plan de joint dégrade l'aspect du récipient.

Il est à noter que la qualité est alors perçue comme décevante et peut empêcher la commercialisation du contenant.

Il est donc important d'éviter un tel jeu au niveau du plan de joint des moules.

On connait du document de brevet publié sous le numéro FR2659265 un système de compensation intégré au dispositif de fabrication du récipient.

Plus précisément, le dispositif comprend une chambre étanche intercalée entre l'un des demi-moules, le premier demi-moule, et son support. Le premier demi-moule est ainsi partiellement mobile par rapport à son support.

Des moyens d'injection d'air sous pression viennent injecter de l'air comprimé à l'intérieur de la chambre étanche lors du soufflage du récipient. L'injection de l'air comprimé à l'intérieur de la chambre étanche permet de plaquer le premier demi-moule mobile contre le deuxième demi-moule pour compenser la pression de soufflage à l'intérieur du récipient.

De manière inhérente au système de verrouillage de tels dispositifs de fabrication, un jeu de déverrouillage et de verrouillage du moule existe toujours. L'injection d'air dans la chambre étanche permet ainsi de compenser le jeu de déverrouillage et de verrouillage du moule pour réaliser le plaquage du premier demi-moule contre le deuxième demi-moule.

Le deuxième demi-moule est fixé de manière solidaire sur son support, sans interposition de moyens élastiques. Ce deuxième demi-moule sert de point de référence pour le centrage de l'ébauche à l'intérieur du moule et pour effectuer certains réglages du dispositif.

Cette solution permet d'améliorer l'aspect visuel du récipient obtenu.

Toutefois, cette solution n'apporte pas une entière satisfaction vis-à-vis du résultat final.

En effet, il a été constaté que des défauts visuels au niveau du plan de joint, bien que moins importants, peuvent quand même être observés (présence d'une marche notamment) sur les récipients produits avec ce type de dispositifs.

De plus, il a également été observé que la pression de soufflage (pouvant atteindre 40 bars) peut déformer transitoirement le matériau constituant le moule, et produire une ovalisation indésirable du récipient.

Enfin, le demi-moule compensé pneumatiquement présente des performances en refroidissement dégradées par rapport au deuxième demi-moule solidaire de son support. En effet, la chambre étanche entre le premier demi-moule et son support induit la présence d'une lame d'air empêchant un transfert optimal de la température depuis le demi-moule jusqu'à son support. Cette différence de performance de refroidissement entre les deux demi-moules peut produire une absence de symétrie entre les deux parties du récipient plaquées contre chacun des demi-moules lors du soufflage. Ainsi, alors même que le récipient présenterait une ovalisation non désirée, il présenterait également une absence de symétrie entre les deux parties précédemment décrites.

On connait du document de brevet publié sous le numéro CH534044 un système de compensation intégré au dispositif de fabrication du récipient.

Ce système de compensation permet d'exercer une double-compensation. En effet, chacun des demi-moules est couplé à son support par l'intermédiaire d'un moyen de compensation prenant la forme de deux plaques souples couplées hermétiquement entre elles sur leur bordure. Ces deux plaques souples définissent entre elles une chambre étanche apte à recevoir un fluide sous pression. Les chambres, situées derrière chaque demi-moule, sont reliées à une conduite véhiculant un fluide sous pression. Préalablement au soufflage d'un récipient dans le moule, les deux chambres sont mises sous pression de manière à plaquer l'un contre l'autre les demi-moules.

Une telle technique, bien que permettant de compenser chacun des demi-moules, engendre des récipients avec des défauts visuels.

D'autres documents pertinents de l'art antérieur sont EP 3 319 780 B1 et EP 2 803 469 B1.

L'invention a notamment pour objectif de pallier les inconvénients de l'art antérieur.

Plus précisément, l'invention a pour objectif de proposer un dispositif pour la fabrication d'un récipient par soufflage ou étirage-soufflage qui permette d'obtenir un récipient présentant une qualité visuelle plus importante que celle des récipients pouvant être obtenus par le biais des dispositifs selon l'art antérieur.

L'invention a également pour objectif de fournir un tel dispositif qui présente un meilleur plan de joint que ceux des dispositifs selon l'art antérieur qui comprennent une compensation pneumatique.

Ces objectifs, ainsi que d'autres qui apparaitront par la suite, sont atteints grâce à l'invention qui a pour objet un dispositif pour la fabrication d'un récipient par soufflage ou étirage-soufflage à partir d'une ébauche en matière plastique, le dispositif comprenant :
- un moule comprenant deux demi-moules définissant ensemble une empreinte du récipient à former ;
- un support pour chacun des demi-moules, chaque demi-moule présentant un débattement par rapport à son support;
- des moyens de compensation d'une pression de soufflage à l'intérieur du moule ; les moyens de compensation comprenant :
- au moins une chambre étanche intercalée entre chaque demi-moule et son support ;
- des moyens d'injection d'un fluide sous pression dans les chambres étanches ; caractérisé en ce qu'il comprend un mécanisme de positionnement référentiel de l'un des demi-moules, dit demi-moule de référence, contre au moins une butée référentielle portée par le support du demi-moule de référence, la ou les butées référentielles tendant à limiter le déplacement du demi-moule de référence vers son support,
et des moyens de maintien en appui du demi-moule de référence contre la ou les butées référentielles tandis que l'autre des demi-moules, dit second demi-moule, est mobile sous une action du fluide sous pression.

Grâce au dispositif selon l'invention, une double compensation est réalisée lors du soufflage ou de l'étirage-soufflage de l'ébauche en matière plastique.

La double compensation permet d'obtenir un meilleur plan de joint de moule.

Le meilleur plan de joint est obtenu grâce aux deux demi-moules qui sont tous les deux plaqués l'un contre l'autre, chacun par le biais de sa chambre étanche lors du soufflage. Ainsi, lors du soufflage du récipient, la pression qui s'exerce sur chacun des demi-moules est compensée des deux côtés du moule, et les efforts se répartissent de manière homogène, que ce soit du côté du demi-moule de référence ou du côté de l'autre demi-moule.

Grâce au demi-moule de référence et à la ou les butées référentielles en déplacement, il est évité que, bien qu'il y ait une double compensation, les deux demi-moules ne soient tous les deux « flottants », et qu'il n'y ait pas de référence spatiale fixe pour le positionnement d'une ébauche dans le moule lors du soufflage.

En effet, pour un bon centrage des ébauches dans le moule préalablement au soufflage et pendant celui-ci, il est nécessaire que le col de ces ébauches soit bien maintenu. En conséquence, grâce au demi-moule de référence qui est en butée, et ainsi fixe, lors du soufflage et de la compensation, le col des ébauches n'a pas tendance à se déplacer.

Les réglages du dispositif sont également simplifiés grâce à ce mécanisme de positionnement référentiel qui conserve un point de référence malgré la double compensation réalisée.

Grâce à la double compensation, le dispositif peut également être conçu pour éviter ou atténuer le phénomène d'ovalisation du récipient.

De plus, la déformation des demi-moules sous l'effet de la pression et ainsi la déformation du récipient, bien qu'inévitables, peuvent alors être anticipées.

Grâce à cette anticipation des déformations, la conception du dispositif peut être prévue pour prédéterminer le phénomène d'ovalisation du récipient de manière à le minimiser.

Plus précisément, grâce à la double compensation, les deux demi-moules vont se toucher mais ne vont pas eux-mêmes conserver leur forme. Par exemple, s'ils définissent une forme de section ronde tous les deux (chaque demi-moule présentant une forme en demi-cercle), alors, sous l'effet de la pression, cette forme ronde tend à s'ovaliser de par la déformation du métal et de l'ouverture des demi-moules sous l'effet de la pression.

Dans le cas où seul l'un des demi-moules est compensé, cette ovalisation n'est pas la même du côté du premier demi-moule par rapport à celle se produisant du côté du deuxième demi-moule.

La double compensation permet ainsi d'avoir une déformation symétrique, ou à tout le moins la plus symétrique possible.

De plus, en incorporant des moyens de compensation prenant la forme d'une chambre étanche entre chacun des demi-moules et de leur support, alors le refroidissement des demi-moules tend à être le plus homogène possible de part et d'autre du moule.

Ainsi, plutôt que d'avoir un moule ayant un deuxième demi-moule se refroidissant plus rapidement que son premier demi-moule (du fait que le premier demi-moule est séparé de son support par une lame d'air qui empêche ou limite une bonne transmission de la température depuis le demi-moule jusqu'au support), alors cette caractéristique (la lame d'air) est retrouvée sur chacun des demi-moules et le transfert de température se réalise de manière homogène.

Selon un mode de réalisation particulier du dispositif :
- le demi-moule de référence présente une surface de compensation S1 définie par la chambre étanche intercalée entre le demi-moule de référence et son support ;
- le second demi-moule présente une surface de compensation S2 définie par la chambre étanche intercalée entre le second demi-moule et son support ;
avec S2 > S1.

Grâce à ce mode de réalisation, la différence de surface de compensation des chambres étanches contribue à former les moyens de maintien en appui du demi-moule de référence contre la ou les butées référentielles.

En effet, du fait de la différence de surface, l'injection d'un fluide dans les chambres étanches à une pression identique, ou à défaut à une pression supérieure dans la chambre étanche du second demi-moule permet de mettre et de maintenir en appui le demi-moule de référence contre la ou les butées référentielles.

Selon un autre mode de réalisation :
- le demi-moule de référence présente une surface de compensation S1 définie par la chambre étanche intercalée entre le demi-moule de référence et son support ;
- le second demi-moule présente une surface de compensation S2 définie par la chambre étanche intercalée entre le second demi-moule et son support ;

avec S2 = S1,
et la surface de compensation S1 du demi-moule de référence est symétrique à la surface de compensation S2 du second demi-moule.

De cette manière, la répartition de l'effort de compensation est symétrique, et tend à produire des effets homogènes, pour le demi-moule de référence ou le second demi-moule.

Selon une première solution, les moyens d'injection sont configurés pour :
- injecter un fluide à une première pression P1 dans la chambre étanche, dite première chambre étanche, intercalée entre le demi-moule de référence et son support ;
- injecter un fluide à une deuxième pression P2 dans la chambre étanche, dite deuxième chambre étanche, intercalée entre le second demi-moule et son support, avec P2 > P1.

Grâce à cette solution, la différence de pression permet de maintenir de manière simple le demi-moule de référence en butée contre la ou les butées référentielles.

Selon une seconde solution, préférée, les moyens d'injection sont configurés pour :
- injecter un fluide à une première pression P1 dans la chambre étanche, dite première chambre étanche, intercalée entre le demi-moule de référence et son support ;
- injecter un fluide à une deuxième pression P2 dans la chambre étanche, dite deuxième chambre étanche, intercalée entre le second demi-moule et son support, avec P2 = P1.

Grâce à cette solution, une même pression est injectée dans les deux chambres étanches, à savoir la première chambre étanche et la deuxième chambre étanche.

Du fait que la première pression et la deuxième pression sont identiques, la conception des moyens d'injection peut être alors simplifiée par l'usage d'un même circuit qui alimente l'ensemble des chambres étanches des moyens de compensation.

Une pression identique permet également de participer à une compensation homogène des efforts résultant du soufflage d'un récipient.

Selon une caractéristique avantageuse, les moyens de maintien comprennent au moins un organe de rappel élastique, dit premier organe de rappel, du demi-moule de référence dans une position plaquée contre son support.

Grâce à cette caractéristique, un élément indépendant des moyens de compensation participe à maintenir le demi-moule de référence dans sa position plaquée contre son support, en butée contre la ou les butées référentielles portées par ledit support.

Cette caractéristique est particulièrement avantageuse dans le cas où les surfaces de compensation présentent une symétrie par rapport à un plan de joint du moule, et où la première pression et la deuxième pression injectées dans les chambres étanches sont identiques.

En effet, dans ce cas, la compensation du moule produit une force de compensation identique de part et d'autre du moule et alors, seul l'organe de rappel élastique des moyens, premier organe de rappel, permet de maintenir plaqué le demi-moule de référence contre son support, et notamment contre la ou les butées référentielles portées par ledit support.

Dans ce cas, selon une caractéristique particulièrement avantageuse, le dispositif comprend au moins un organe de rappel élastique, dit deuxième organe de rappel, du second demi-moule contre son support, et en ce que :
- le ou les premiers organes de rappel exercent un effort de rappel E1 ;
- le ou les deuxièmes organes de rappel exercent un effort de rappel E2,
avec E1 > E2.

Dans cette configuration, chacun des demi-moules est sujet à un rappel élastique contre son support. Ce rappel élastique facilite l'ouverture et la fermeture du moule tout en participant à maintenir le demi-moule de référence contre la ou les butées référentielles lors du soufflage d'un récipient.

En effet, du fait de la différence entre les efforts de rappel du premier organe de rappel et du deuxième organe de rappel, alors le total des forces s'exerçant sur le demi-moule a tendance, au niveau des seuls efforts de rappel, à maintenir plaqué le demi-moule de référence contre son support et sa ou ses butées référentielles.

L'invention a également pour objet un procédé de fabrication d'un récipient par soufflage ou étirage-soufflage d'une ébauche en matière plastique dans un moule comprenant deux demi-moules portés chacun par un support, pour chaque demi-moule au moins une chambre étanche étant intercalée entre ledit demi-moule et son support,
le procédé comprenant une étape de compensation d'une pression de soufflage à l'intérieur du moule,
dans lequel l'étape de compensation consiste à injecter un fluide sous pression dans les chambres étanches pour exercer une force de compensation,
caractérisé en ce que lors de l'étape de compensation, l'un des demi-moule, dit demi-moule de référence, adopte une position spatiale de référence en étant en appui contre au moins une butée référentielle portée par le support du demi-moule de référence, tandis que l'autre demi-moule, dit second demi-moule, est plaqué contre le demi-moule de référence.

Grâce à un tel procédé, il peut être réalisé une compensation de chacun des demi-moules d'un moule d'un dispositif de fabrication d'un récipient par soufflage ou par étirage-soufflage à partir d'une ébauche en matière plastique.

Cette double compensation permet de tendre à homogénéiser la déformation des demi-moules sous l'effet du soufflage d'un récipient.

En effet, à la différence des dispositifs et des procédés selon l'art antérieur dans lequel seul l'un des deux demi-moules est compensé, notamment de manière pneumatique, alors, selon le procédé selon l'invention, même le deuxième demi-moule bénéficie de cette compensation.

Selon le procédé selon l'invention, cette double compensation n'est pas réalisée au détriment de l'obtention d'une référence spatiale fixe permettant d'ajuster les réglages connexes du dispositif permettant de fabriquer le récipient, et au bon centrage de l'ébauche dans le moule.

En effet, grâce au procédé selon l'invention, le demi-moule de référence n'est pas flottant lors de l'étape de compensation. Plus précisément, lors de l'étape de compensation, le demi-moule de référence est en appui contre au moins une butée référentielle qui est portée par le support de ce demi-moule de référence. En conséquence, ce demi-moule de référence adopte une position fixe par rapport à son support, et c'est de manière prévisible que les réglages du dispositif peuvent être indexés à la position spatiale du demi-moule de référence qui est une position spatiale de référence.

Selon une caractéristique particulièrement avantageuse, lors de l'étape de compensation, une force de compensation identique est exercée pour chaque demi-moule, et une force de rappel du demi-moule de référence dans une position en appui contre la ou les butées référentielles est exercée, la force de rappel étant distincte desdites forces de compensation.

Grâce à cette caractéristique, la compensation de chacun des demi-moules est identique, et seule la force de rappel exerce une action pour maintenir le demi-moule de référence en appui contre la ou les butées référentielles portées par le support du demi-moule de référence.

Cette caractéristique permet ainsi d'homogénéiser les efforts de compensation produits par les moyens de compensation entre les demi-moules et de dédier le maintien du demi-moule de référence dans sa position de référence à un élément qui ne participe pas, en lui-même, à la compensation.

Avantageusement, lors de l'étape de compensation :
- une force de compensation F1 est exercée pour le demi-moule de référence ;
- une force de compensation F2 est exercée pour le second demi-moule,
avec F2 >F1.

Selon cette caractéristique avantageuse, il s'agit de la force de compensation exercée pour chacun des demi-moules qui permet de plaquer le demi-moule de référence contre son support, et notamment contre la ou les butées référentielles.

Selon une solution particulière, lors de l'étape de compensation :
- un fluide sous une pression P2 est injecté dans la chambre étanche intercalée entre le second demi-moule et son support ;
- un fluide sous une pression P1 est injecté dans la chambre étanche intercalée entre le demi-moule de référence et son support,
avec P2 > P1.

Selon cette solution, la différence de pression injectée dans les chambres étanches de chacun des demi-moules permet au demi-moule de référence d'adopter sa position spatiale de référence.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
[Fig. 1] la figure 1 est une représentation en coupe longitudinale d'un dispositif de fabrication d'un récipient par soufflage ou étirage-soufflage, selon l'invention, passant par le milieu d'une empreinte définie par un moule du dispositif ;
[Fig. 2] la figure 2 est une vue latérale d'un support d'un demi-moule du dispositif selon l'invention ;
[Fig. 3] la figure 3 est une illustration schématique en coupe transversale du dispositif selon l'invention dans une position d'ouverture du moule ;
[Fig. 4] la figure 4 est une représentation schématique d'un détail centré sur un organe de rappel élastique de moyens de maintien du dispositif selon l'invention ;
[Fig. 5] la figure 5 est une représentation schématique en coupe transversale d'un dispositif selon l'invention, dans lequel le moule est dans une position refermée et où aucun effort de compensation n'est réalisé ;
[Fig. 6] la figure 6 est une représentation schématique en coupe transversale du moule du dispositif selon l'invention dans laquelle le moule est compensé.

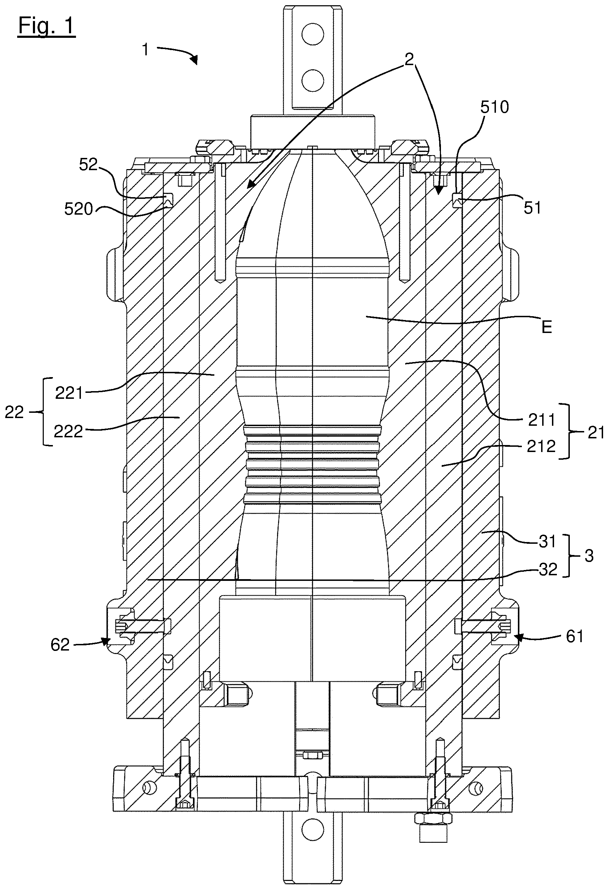

La figure 1 illustre un dispositif 1 selon l'invention permettant de fabriquer un récipient en matière plastique par soufflage ou par étirage-soufflage à partir d'une ébauche.

Le dispositif 1 comprend :
- un moule 2 ;
- deux supports 3.

Le moule 2 comprend deux demi-moules, dont un demi-moule de référence 21, et un second demi-moule 22.

Pour le soufflage d'un récipient, le demi-moule de référence 21 et le second demi-moule 22 sont appliqués l'un contre l'autre et définissent entre eux une cavité à l'empreinte E du récipient à former.

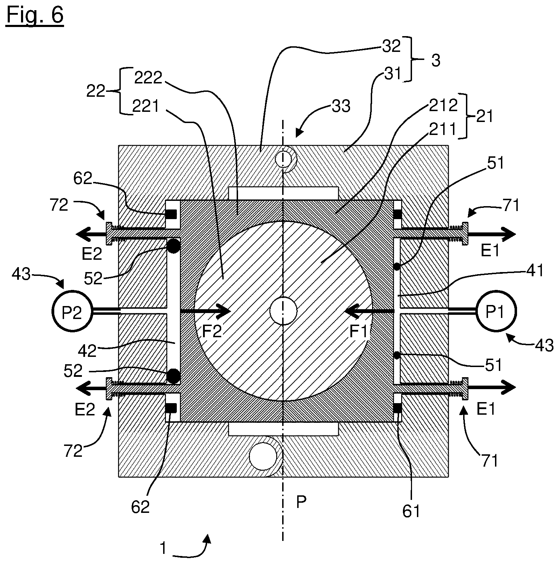

Le demi-moule de référence 21 et le second demi-moule 22 définissent également un plan de joint P (illustré sur la figure 6) par leur mise en contact. Plus précisément, ce plan de joint P est défini au niveau des faces respectives du demi-moule de référence 21 et du second demi-moule 22 qui sont en contact l'une avec l'autre lors du soufflage du récipient.

Le demi-moule de référence 21 comprend plus précisément une première demi-coquille 211 et un premier support-coquille 212.

De même, le second demi-moule 22 comprend une deuxième demi-coquille 221 et un deuxième support-coquille 222.

Cette structure de moule est notamment décrite dans le document de brevet publié sous le numéro EP 0 821 641.

Les deux supports 3, comprennent plus spécifiquement un premier support 31 et un deuxième support 32. Ce premier support 31 et ce deuxième support 32 sont classiquement désignés sous le terme d'équerre.

Le premier support 31 et le deuxième support 32 portent respectivement le demi-moule de référence 21 et le second demi-moule 22.

En d'autres termes, le premier support 31 et le deuxième support 32 enchâssent le moule 2.

Le premier support 31 et le deuxième support 32 sont conçus pour reprendre et répartir les efforts de soufflage s'exerçant à l'intérieur du moule 2 lors du soufflage.

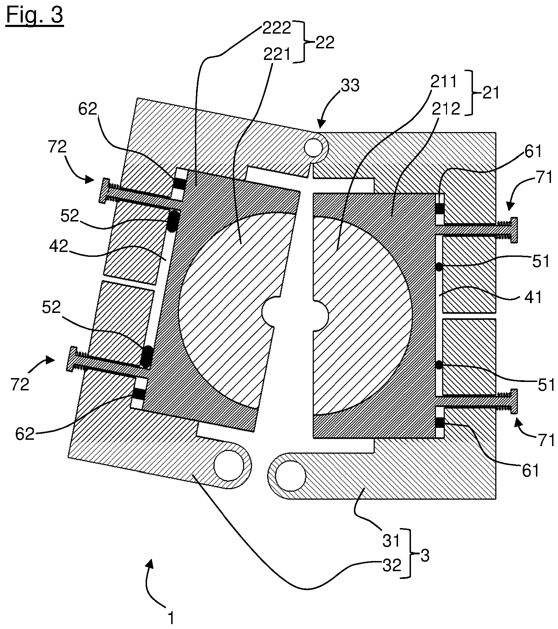

En référence aux figures 1, 3, 5 et 6, le premier support 31 et le deuxième support 32 sont mobiles, par l'intermédiaire d'une charnière 33 entre une position ouverte (figure 3) et une position fermée, illustrées par les figures 1, 5 et 6, positions dans laquelle le moule 2 est également fermé.

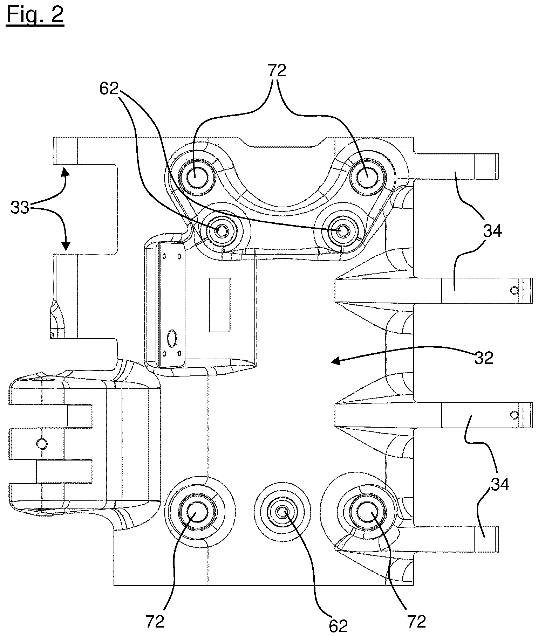

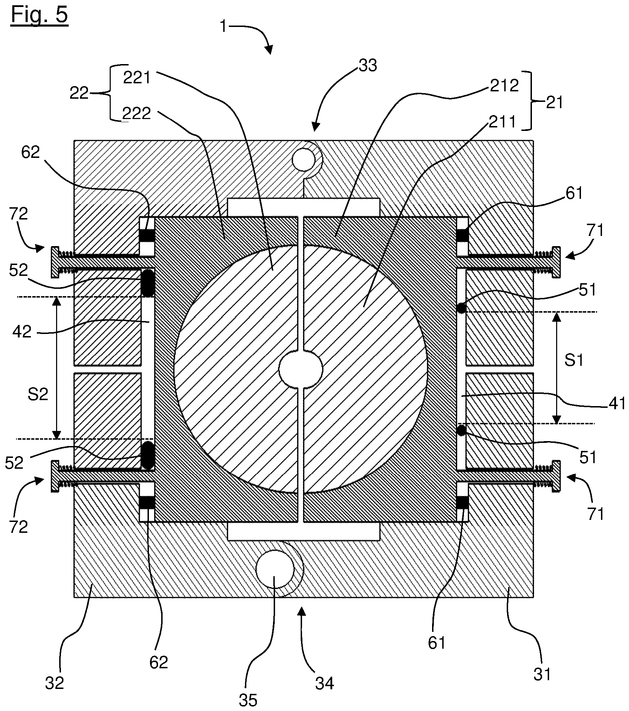

En référence à la figure 2 qui illustre un deuxième support 32, ainsi qu'à la figure 5, le dispositif 1 comprend des moyens de verrouillage du premier support 31 et du deuxième support 32 dans la position de soufflage du récipient.

Les moyens de verrouillage sont connus et sont notamment du type comprenant :
- des pattes 34 présentées par le premier support 31 et le deuxième support 32, percées d'alésage concentrique, les pattes 34 s'imbriquant les unes dans les autres en position de soufflage du récipient, et étant réparties sur toute la hauteur des supports 31, 32 ;
- des doigts 35, commandés par un arbre commun, verrouillant deux pattes 34 successives et s'insérant dans les alésages.

Le dispositif 1 présente un jeu de verrouillage et de déverrouillage entre le demi-moule de référence 21 et le second demi-moule 22 permettant le passage des moyens de verrouillage d'un état déverrouillé à un état verrouillé, et inversement.

En référence aux figures 1, 3, 5 et 6, selon le principe de l'invention, le dispositif 1 comprend également des moyens de compensation d'une pression de soufflage à l'intérieur du moule 2.

A cet effet, les moyens de compensation utilisent un fluide pour compenser la pression de soufflage à l'intérieur du moule 2.

Tel que cela est détaillé par la suite, les moyens de compensation permettent d'exercer une force de compensation F1 sur le demi-moule de référence 21, et une force de compensation F2 sur le second demi-moule 22.

Ces moyens de compensation sont notamment pneumatiques, et le fluide est de l'air sous pression.

Ces moyens de compensation comprennent :
- une première chambre étanche 41 intercalée entre le demi-moule de référence 21 et le premier support 31 ;
- une deuxième chambre étanche 42 intercalée entre le second demi-moule 22 et le deuxième support 32 ;
- des moyens d'injection 43 d'un fluide sous pression couplés à la première chambre étanche 41 et à la deuxième chambre étanche 42 (représentés sur la figure 6).

Le demi-moule de référence 21 est mobile par rapport au premier support 31. Le demi-moule de référence 21 présente notamment un débattement par rapport au premier support 31.

De manière similaire, le second demi-moule 22 est mobile par rapport au deuxième support 32, le second demi-moule 22 présentant ainsi un débattement par rapport au deuxième support 32.

Tel qu'illustré plus spécifiquement sur la figure 5, le demi-moule de référence 21 présente une surface de compensation S1 qui est définie par la première chambre étanche 41 intercalée entre le demi-moule de référence 21 et le premier support 31.

Quant à lui, le second demi-moule 22 présente une surface de compensation S2 définie par la deuxième chambre étanche 42 intercalée entre le second demi-moule 22 et le deuxième support 32.

La surface de compensation S2 du second demi-moule 22 est supérieure ou égale à la surface de compensation S1 du demi-moule de référence 21, soit S2 ≥ S1.

Selon le présent mode de réalisation et tel qu'illustré par la figure 5, la surface de compensation S2 est strictement supérieure à la surface de compensation S1, soit S2 > S1.

Toutefois, selon un autre mode de réalisation plus avantageux, la surface de compensation S1 du demi-moule de référence 21 est égale à la surface de compensation S2 du second demi-moule 22, soit S1 = S2.

Dans ce cas, la surface de compensation S1 est avantageusement symétrique à la surface de compensation S2. Il s'agit notamment d'une symétrie planaire selon le plan de joint P illustré sur la figure 6.

Le dispositif 1 comprend également un premier joint périphérique 51 élastiquement déformable ainsi qu'un deuxième joint périphérique 52 élastiquement déformable.

Le premier joint périphérique 51 délimite la première chambre 41 étanche entre le premier support 31 et le demi-moule de référence 21.

De manière similaire, le deuxième joint périphérique 52 délimite la deuxième chambre étanche 42 entre le deuxième support 32 et le second demi-moule 22.

Lors du soufflage, l'air sous pression est injecté dans les chambres 41, 42 étanches, ce qui provoque une augmentation de la pression dans celles-ci. Cette pression est susceptible d'éloigner l'un de l'autre les demi-moules 21, 22 de leurs supports 31, 32. Les joints périphériques élastiquement déformables 51, 52 assurent une liaison étanche entre chacun des demi-moules 21, 22 et leur support 31, 32 respectif.

Le premier joint périphérique 51 et le deuxième joint périphérique 52 sont avantageusement des joints à lèvres qui présentent une section sensiblement en U.

En référence à la figure 1, chaque joint périphérique 51, 52 est logé dans une gorge 510, 520 présenté respectivement par le demi-moule de référence 21 et par le second demi-moule 22.

Le dispositif 1 comprend également un mécanisme de positionnement référentiel de l'un des demi-moules, désigné alors par l'expression demi-moule de référence 21, contre au moins une butée référentielle 61 portée par le support du demi-moule de référence 21 tandis que le second demi-moule 22 est quant à lui mobile sous une action du fluide sous pression.

Le mécanisme de positionnement référentiel évite que, lors de la compensation, le fluide sous pression injecté dans la première chambre étanche 41 parvienne à éloigner le demi-moule de référence de la ou les butées référentielles 61.

Le mécanisme de positionnement référentiel comprend ainsi plus spécifiquement au moins une butée référentielle 61 portée par le premier support 31.

Selon le présent mode de réalisation, le dispositif 1 comprend trois butées référentielles 61 portées par le premier support 31.

Ces butées référentielles 61 tendent à limiter le déplacement du demi-moule de référence 21 vers son support.

Toujours selon le présent mode de réalisation, et tel qu'illustré par les figures 1 à 3, 5 et 6, le dispositif 1 comprend également des butées annexes 62 qui limitent le débattement du second demi-moule 22 par rapport au deuxième support 32.

Les butées référentielles 61 et les butées annexes 62 sont plus spécifiquement des butées à vis pouvant être réglées pour modifier le débattement du demi-moule de référence 21 et du second demi-moule 22.

Tel qu'évoqué précédemment, le dispositif 1 comprend des moyens d'injection 43 d'un fluide sous pression dans les chambres 41, 42 étanches.

Plus spécifiquement, ces moyens d'injection 43 sont configurés pour injecter :
- un fluide sous une première pression P1 dans la chambre étanche intercalée entre le demi-moule de référence 21 et son support 31, soit en d'autres termes dans la première chambre étanche 41 ;
- un fluide sous une deuxième pression P2 dans la chambre étanche intercalée entre le second demi-moule 22 et son support, soit en d'autres termes dans la deuxième chambre étanche 42.

Selon une première solution, la pression P2 est strictement supérieure à la pression P1.

Selon une autre solution, plus avantageuse, la pression P2 est égale à la pression P1.

Selon le présent mode de réalisation, les moyens de maintien comprennent également des organes de rappel élastique, dits premiers organes de rappel 71, du demi-moule de référence 21 dans une position plaquée contre son support.

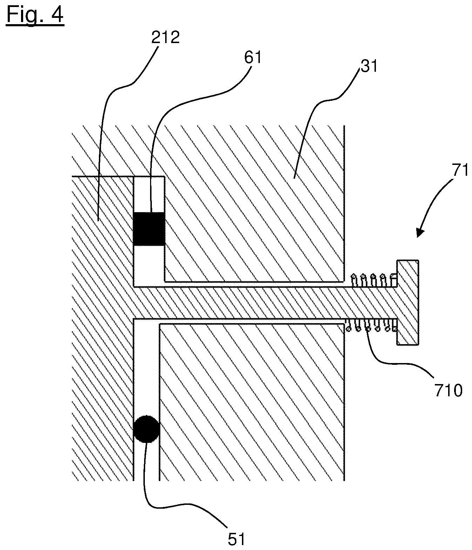

Tel qu'illustré par la figure 4, les premiers organes de rappel 71 comprennent des ressorts 710.

Les premiers organes de rappel 71 sont tarés de manière à exercer un effort de rappel E1. Cet effort de rappel E1 peut par exemple être ajusté par le choix d'un ressort 710 avec une force de rappel élastique adaptée.

De même et en référence aux figures 2, 3, 5 et 6, le dispositif 1 comprend des deuxièmes organes de rappel 72 du second demi-moule 22 contre son support 32.

Ces deuxièmes organes de rappel 72 sont configurés pour exercer un effort de rappel E2.

Tel qu'illustré plus spécifiquement sur la figure 2, trois butées annexes 62 et quatre deuxièmes organes de rappel 72 peuvent être observé sur le deuxième support 32. Le premier support 31, non représenté, présente une conception similaire et un nombre identique de butées référentielles 61 et de premiers organes de rappel 71.

Selon un mode de réalisation dans lequel les forces de compensation F1, F2 de chacun des demi-moules sont égales de part et d'autres du moule 2, alors l'effort de rappel E1 est supérieur à l'effort de rappel E2.

Dans ce cas, les premiers organes de rappel 71 tendent à toujours maintenir le demi-moule de référence 21 en appui contre les butées référentielles 61, et ainsi dans une position plaquée contre son support 31.

Le dispositif 1 selon l'invention précédemment décrit permet la mise en œuvre d'un procédé de fabrication d'un récipient par soufflage ou étirage-soufflage à partir d'une ébauche en matière plastique.

Ce procédé de fabrication comprend une étape de compensation d'une pression de soufflage à l'intérieur du moule.

Lors de l'étape de compensation, il est injecté un fluide sous pression, notamment de l'air, dans les chambres étanches pour exercer une force de compensation.

Notamment, il est injecté un fluide sous une pression P1 dans la première chambre étanche 41, ainsi qu'un fluide sous une pression P2 dans la chambre étanche 42.

Ces fluides sous pression remplissent les chambre 41, 42 étanches et exercent une force de compensation F1, F2 sur la surface de compensation S1, S2 de ces chambre 41, 42 étanches.

Selon le principe de l'invention, lors de l'étape de compensation, le demi-moule de référence 21 adopte une position spatiale de référence en étant en appui contre les butées référentielles 61 portées par le support du demi-moule de référence 21 (le premier support 31), tandis que le second demi-moule 22 est quant à lui plaqué contre le demi-moule de référence 21.

En référence à la figure 6 qui illustre l'étape de compensation, il peut être observé que les deux demi-moules sont en contact l'un contre l'autre.

Lors de cette étape, la première chambre étanche 41 et la deuxième chambre étanche 42 sont mises sous pression grâce aux moyens d'injection 43.

Grâce aux moyens de maintien, lors de cette étape de compensation, le demi-moule de référence 21 adopte sa position spatiale de référence en étant en appui contre les butées référentielles 61.

Tel que cela est visible sur la figure 6, le second demi-moule 22 est quant à lui décollé des butées annexes 62 sous l'effet de la compensation, et plaqué contre le demi-moule de référence 21.

L'adoption de la position spatiale de référence par le demi-moule de référence 21 lors de l'étape de compensation peut être obtenue de différentes manières.

Lors de l'étape de compensation, différentes forces s'exercent sur chacun des demi-moules, dont notamment :
- une force de compensation F1, F2 pour chaque demi-moule 21, 22, exercée par les moyens de compensation ;
- une force de rappel E1, E2, exercée par les premiers organes de rappel 71 et par les deuxièmes organes de rappel 72.

Pour arriver à l'objectif de l'invention, la somme des forces s'exerçant sur le demi-moule de référence 21 et la somme des forces s'exerçant sur le second demi-moule 22 présentent une différence telle que le demi-moule de référence 21 est maintenu en appui contre les butées référentielles 61.

Selon une première forme de réalisation, particulièrement avantageuse, lors de l'étape de compensation, une force de compensation F1, F2 identique est exercée pour chaque demi-moule 21, 22, et la force de rappel E1 du demi-moule de référence 21 dans une position en appui contre les butées référentielles 61 est exercée, cette force de rappel étant distincte des forces de compensation. La force de rappel E1 exercée par les premiers organes de rappel 71 est supérieure à la force de rappel E2 exercée par les deuxièmes organes de rappel 72.

Toutefois, il est fait attention à ce que l'effort de rappel E1 tende à avoir le moins d'écart possible avec l'effort de rappel E2.

Selon une deuxième forme de réalisation, la force de compensation F2 est strictement supérieure à la force de compensation F1. Les forces de compensation F1, F2 permettent alors de maintenir le demi-moule de référence 21 contre les butées référentielles 61, tandis que le second demi-moule 22 est entraîné et plaqué contre le demi-moule de référence 21.

Cette différence de forces de compensation peut notamment être obtenue par le biais de l'injection d'un fluide, dans la deuxième chambre étanche 42, à une pression P2 qui est strictement supérieure à une pression P1 du fluide injecté dans la première chambre étanche 41.

Cette différence de force de compensation peut également être obtenue par le biais d'une injection d'un fluide dans les chambres 41, 42 étanches à une pression P1, P2 identique, avec des chambres 41, 42 étanches de forme différente, et notamment avec une surface de compensation S2 du second demi-moule 22 supérieure à une surface de compensation S1 du demi-moule de référence 21.

De manière complémentaire à ces variantes, il est particulièrement intéressant que la somme des forces (force de compensation F2 - effort de rappel E2) s'exerçant sur le second demi-moule 22 lors de l'étape de compensation soit supérieure à celle des forces (force de compensation F1 - effort de rappel E1) s'exerçant sur le demi-moule de référence 21 avec une différence maximale de l'ordre de 5%.

Pour chacune de ces variantes envisageables, et d'autres variantes non évoquées, il est avantageusement fait attention à ce que le demi-moule de référence 21 ne se décale jamais de ses butées référentielles 61 lors du soufflage et de la compensation du moule.

Cet objectif est atteint en anticipant l'injection d'un fluide dans la seconde chambre étanche 42 par rapport à l'injection du fluide sous pression dans la première chambre étanche 41.

Cet objectif est également atteint avec une force de rappel E1 strictement supérieure à la force de rappel E2.

En référence aux figures 3, 5 et 6, le fonctionnement du dispositif 1 selon l'invention est décrit ci-après.

Pour le formage d'un récipient, le moule 2 est ouvert et reçoit une ébauche.

La fermeture du moule 2 est réalisée par le passage du premier support 31 et du deuxième support 32 de leur position ouverte à leur position fermée.

Les moyens de verrouillage permettent de s'assurer que le moule 2 ne s'ouvre pas lors du soufflage. Cette fermeture du moule est favorisée grâce aux premiers organes de rappel 71 et aux deuxièmes organes de rappel 72 qui maintiennent les demi-moules plaqués respectivement contre les butées référentielles 61 et les butées annexes 62 de leur support 31, 32 respectif.

Pendant la phase de soufflage, de l'air est injecté dans la préforme en même temps que les moyens d'injection 43 de fluide sous pression sont activés.

Les moyens d'injection 43 sont pilotés de manière à coordonner la montée en pression du récipient dans le moule 2 avec celle des chambres 41, 42 étanches. La compensation est alors réalisée de manière symétrique au niveau des deux demi-moules 21, 22.

Avantageusement, la pression de soufflage à l'intérieur du moule 2 est égale à la pression d'injection d'un fluide sous pression à l'intérieur de la première chambre étanche 41 et à l'intérieur de la deuxième chambre étanche 42.

L'injection d'air dans la deuxième chambre étanche 42 permet d'éloigner le second demi-moule 22 du deuxième support 32, et ainsi de plaquer le deuxième demi-moule 22 contre le demi-moule de référence 21.

Selon le principe de l'invention, la première chambre étanche 41 n'est pas éloignée de son support 31.

En effet, lors du soufflage et, concomitamment lors de l'étape de compensation, le demi-moule de référence 21 reste dans sa position spatiale de référence en appui contre les butées référentielles 61 portées par le premier support 31.

Ce maintien est assuré par les premiers organes de rappel 71 qui exercent un effort de rappel E1 suffisant.

A la fin du soufflage du récipient, la pression est relâchée dans le moule 2, et l'air des chambres 41, 42 étanches est évacué.

Le premier support 31 et le deuxième support 32 passent alors de leur position fermée du récipient à leur position ouverte pour ouvrir le moule 2, et permettre l'extraction du récipient formé, le départ d'un nouveau cycle de formage d'un récipient.

## Revendications

1. Dispositif (1) pour la fabrication d'un récipient par soufflage ou étirage-soufflage à partir d'une ébauche en matière plastique, le dispositif comprenant :
- un moule (2) comprenant deux demi-moules (21, 22) définissant ensemble une empreinte (E) du récipient à former ;
- un support (31, 32) pour chacun des demi-moules (21, 22), chaque demi-moule (21, 22) présentant un débattement par rapport à son support (31, 32) ;
- des moyens de compensation d'une pression de soufflage à l'intérieur du moule (2) ;
les moyens de compensation comprenant :
- au moins une chambre (41, 42) étanche intercalée entre chaque demi-moule (21, 22) et son support (31, 32) ;
- des moyens d'injection (43) d'un fluide sous pression dans les chambres (41, 42) étanches ;
**caractérisé en ce qu'**il comprend un mécanisme de positionnement référentiel de l'un des demi-moules, dit demi-moule de référence (21), contre au moins une butée référentielle (61) portée par le support (31) du demi-moule de référence (21), la ou les butées référentielles (61) tendant à limiter le déplacement du demi-moule de référence (21) vers son support (31),
et des moyens de maintien en appui du demi-moule de référence (21) contre la ou les butées référentielles (61) tandis que l'autre des demi-moules, dit second demi-moule (22), est mobile sous une action du fluide sous pression.

2. Dispositif (1) selon la revendication précédente, **caractérisé en ce que** :
- le demi-moule de référence (21) présente une surface de compensation (S1) définie par la chambre étanche (41) intercalée entre le demi-moule de référence (21) et son support (31) ;
- le second demi-moule (22) présente une surface de compensation (S2) définie par la chambre étanche (42) intercalée entre le second demi-moule (22) et son support (32) ;
avec S2 > S1.

3. Dispositif (1) selon la revendication 1, **caractérisé en ce que** :
- le demi-moule de référence (21) présente une surface de compensation (S1) définie par la chambre étanche (41) intercalée entre le demi-moule de référence (21) et son support (31) ;
- le second demi-moule (22) présente une surface de compensation (S2) définie par la chambre étanche (42) intercalée entre le second demi-moule (22) et son support (32) ;
avec S2 = S1,
et **en ce que** la surface de compensation (S1) du demi-moule de référence (21) est symétrique à la surface de compensation (S2) du second demi-moule (22).

4. Dispositif (1) selon l'une quelconque des revendications précédentes, **caractérisé en ce que** les moyens d'injection (43) sont configurés pour :
- injecter un fluide à une première pression (P1) dans la chambre étanche, dite première chambre étanche (41), intercalée entre le demi-moule de référence (21) et son support (31) ;
- injecter un fluide à une deuxième pression (P2) dans la chambre étanche, dite deuxième chambre étanche (42), intercalée entre le second demi-moule (22) et son support (32),
avec P2 > P1.

5. Dispositif (1) selon l'une quelconque des revendications 1 à 3, **caractérisé en ce que** les moyens d'injection (43) sont configurés pour :
- injecter un fluide à une première pression (P1) dans la chambre étanche, dite première chambre étanche (41), intercalée entre le demi-moule de référence (21) et son support (31) ;
- injecter un fluide à une deuxième pression (P2) dans la chambre étanche, dite deuxième chambre étanche (42), intercalée entre le second demi-moule (22) et son support (32),
avec P2 = P1.

6. Dispositif (1) selon l'une quelconque des revendications précédentes, **caractérisé en ce que** les moyens de maintien comprennent au moins un organe de rappel élastique, dit premier organe de rappel (71), du demi-moule de référence (21) dans une position plaquée contre son support (31).

7. Dispositif (1) selon la revendication précédente, **caractérisé en ce qu'**il comprend au moins un organe de rappel élastique, dit deuxième organe de rappel (72), du second demi-moule (22) contre son support (32),
et **en ce que** :
- le ou les premiers organes de rappel (71) exercent un effort de rappel (E1) ;
- le ou les deuxièmes organes de rappel (72) exercent un effort de rappel (E2), avec E1 > E2.

8. Procédé de fabrication d'un récipient par soufflage ou étirage-soufflage d'une ébauche en matière plastique dans un moule (2) comprenant deux demi-moules (21, 22) portés chacun par un support (31, 32), pour chaque demi-moule (21, 22) au moins une chambre (41, 42) étanche étant intercalée entre ledit demi-moule (21, 22) et son support (31,32),
le procédé comprenant une étape de compensation d'une pression de soufflage à l'intérieur du moule (2),
dans lequel l'étape de compensation consiste à injecter un fluide sous pression dans les chambres (41, 42) étanches pour exercer une force de compensation, **caractérisé en ce que** lors de l'étape de compensation, l'un des demi-moule, dit demi-moule de référence (21), adopte une position spatiale de référence en étant en appui contre au moins une butée référentielle (61) portée par le support (31) du demi-moule de référence (21), tandis que l'autre demi-moule, dit second demi-moule (22), est plaqué contre le demi-moule de référence (21).

9. Procédé selon la revendication précédente, **caractérisé en ce que** lors de l'étape de compensation, une force de compensation (F1, F2) identique est exercée pour chaque demi-moule (21, 22), et une force de rappel (E1) du demi-moule de référence (21) dans une position en appui contre la ou les butées référentielles (61) est exercée, la force de rappel (E1) étant distincte desdites forces de compensation (F1, F2).

10. Procédé selon la revendication 8, **caractérisé en ce que** lors de l'étape de compensation :
- une force de compensation (F1) est exercée pour le demi-moule de référence (21) ;
- une force de compensation (F2) est exercée pour le second demi-moule (22), avec F2 >F1.

11. Procédé selon la revendication précédente, **caractérisé en ce que** lors de l'étape de compensation :
- un fluide sous une pression (P1) est injecté dans la chambre étanche, dite première chambre étanche (41), intercalée entre le demi-moule de référence (21) et son support (31) ;
- un fluide sous une pression P2 est injecté dans la chambre étanche, dite deuxième chambre étanche (42), intercalée entre le second demi-moule (22) et son support (32) ;
avec P2 > P1.

## Patentansprüche

1. Vorrichtung (1) zur Herstellung eines Behälters durch Blasformen oder Streckblasformen ausgehend von einem Vorformling aus Kunststoff, wobei die Vorrichtung Folgendes beinhaltet:
- eine Form (2), die zwei Formhälften (21, 22) beinhaltet, die zusammen einen Abdruck (E) des zu bildenden Behälters definieren;
- einen Träger (31, 32) für jede der Formhälften (21, 22), wobei jede Formhälfte (21, 22) zu ihrem Träger (31, 32) ein Spiel aufweist;
- Mittel zum Ausgleichen eines Blasformdrucks innerhalb der Form (2);
wobei die Ausgleichsmittel Folgendes beinhalten:
- mindestens eine dichte Kammer (41, 42), die zwischen jeder Formhälfte (21, 22) und ihrem Träger (31, 32) eingefügt ist;
- Mittel zum Einspritzen (43) eines Druckfluids in die dichten Kammern (41, 42);
**dadurch gekennzeichnet, dass** sie Folgendes beinhaltet: einen Mechanismus zur Referenzpositionierung einer der Formhälften, als Referenzformhälfte (21) bezeichnet, an mindestens einem Referenzanschlag (61), der durch den Träger (31) der Referenzformhälfte (21) getragen wird, wobei der oder die Referenzanschläge (61) die Verschiebung der Referenzformhälfte (21) hin zu ihrem Träger (31) zu begrenzen suchen,
und Mittel zum Halten der Referenzformhälfte (21) in Anlage an dem oder den Referenzanschlägen (61), während die andere der Formhälften, als zweite Formhälfte (22) bezeichnet, unter Einwirkung des Druckfluids beweglich ist.

2. Vorrichtung (1) nach dem vorhergehenden Anspruch, **dadurch gekennzeichnet, dass**:
- die Referenzformhälfte (21) eine Ausgleichsfläche (S1) aufweist, die durch die dichte Kammer (41) definiert wird, die zwischen der Referenzformhälfte (21) und ihrem Träger (31) eingefügt ist;
- die zweite Formhälfte (22) eine Ausgleichsfläche (S2) aufweist, die durch die dichte Kammer (42) definiert wird, die zwischen der zweiten Formhälfte (22) und ihrem Träger (32) eingefügt ist;
wobei S2 > S1.

3. Vorrichtung (1) nach Anspruch 1, **dadurch gekennzeichnet, dass**:
- die Referenzformhälfte (21) eine Ausgleichsfläche (S1) aufweist, die durch die dichte Kammer (41) definiert wird, die zwischen der Referenzformhälfte (21) und ihrem Träger (31) eingefügt ist;
- die zweite Formhälfte (22) eine Ausgleichsfläche (S2) aufweist, die durch die dichte Kammer (42) definiert wird, die zwischen der zweiten Formhälfte (22) und ihrem Träger (32) eingefügt ist;
wobei S2 = S1,
und dass die Ausgleichsfläche (S1) der Referenzformhälfte (21) zu der Ausgleichsfläche (S2) der zweiten Formhälfte (22) symmetrisch ist.

4. Vorrichtung (1) nach einem der vorhergehenden Ansprüche, **dadurch gekennzeichnet, dass** die Einspritzmittel (43) zu Folgendem konfiguriert sind:
- Einspritzen eines Fluids mit einem ersten Druck (P1) in die dichte Kammer, als erste dichte Kammer (41) bezeichnet, die zwischen der Referenzformhälfte (21) und ihrem Träger (31) eingefügt ist;
- Einspritzen eines Fluids mit einem zweiten Druck (P2) in die dichte Kammer, als zweite dichte Kammer (42) bezeichnet, die zwischen der zweiten Formhälfte (22) und ihrem Träger (32) eingefügt ist,
wobei P2 > P1.

5. Vorrichtung (1) nach einem der Ansprüche 1 bis 3, **dadurch gekennzeichnet, dass** die Einspritzmittel (43) zu Folgendem konfiguriert sind:
- Einspritzen eines Fluids mit einem ersten Druck (P1) in die dichte Kammer, als erste dichte Kammer (41) bezeichnet, die zwischen der Referenzformhälfte (21) und ihrem Träger (31) eingefügt ist;
- Einspritzen eines Fluids mit einem zweiten Druck (P2) in die dichte Kammer, als zweite dichte Kammer (42) bezeichnet, die zwischen der zweiten Formhälfte (22) und ihrem Träger (32) eingefügt ist,
wobei P2 = P1.

6. Vorrichtung (1) nach einem der vorhergehenden Ansprüche, **dadurch gekennzeichnet, dass** die Haltemittel mindestens ein elastisches Organ zum Zurückstellen, als erstes Rückstellorgan (71) bezeichnet, der Referenzformhälfte (21) in eine gegen ihren Träger (31) gedrückte Position beinhalten.

7. Vorrichtung (1) nach dem vorhergehenden Anspruch, **dadurch gekennzeichnet, dass** sie mindestens ein elastisches Organ zum Zurückstellen, als zweites Rückstellorgan (72) bezeichnet, der zweiten Formhälfte (22) gegen ihren Träger (32) beinhaltet,
und dass:
- das oder die ersten Rückstellorgane (71) eine Rückstellkraft (E1) ausüben;
- das oder die zweiten Rückstellorgane (72) eine Rückstellkraft (E2) ausüben,
wobei E1 > E2.

8. Verfahren zur Herstellung eines Behälters durch Blasformen oder Streckblasformen eines Vorformlings aus Kunststoff in einer Form (2), die zwei Formhälften (21, 22) beinhaltet, die jeweils durch einen Träger (31, 32) getragen werden, wobei für jede Formhälfte (21, 22) mindestens eine dichte Kammer (41, 42) zwischen der Formhälfte (21, 22) und ihrem Träger (31, 32) eingefügt ist,
wobei das Verfahren einen Schritt des Ausgleichens eines Blasformdrucks innerhalb der Form (2) beinhaltet,
wobei der Ausgleichsschritt darin besteht, ein Druckfluid in die dichten Kammern (41, 42) einzuspritzen, um eine Ausgleichskraft auszuüben, **dadurch gekennzeichnet, dass** während des Ausgleichsschritts eine der Formhälften, als Referenzformhälfte (21) bezeichnet, eine räumliche Referenzposition einnimmt, indem sie an mindestens einem Referenzanschlag (61), der von dem Träger (31) der Referenzformhälfte (21) getragen wird, anliegt, während die andere Formhälfte, als zweite Formhälfte (22) bezeichnet, gegen die Referenzformhälfte (21) gedrückt wird.

9. Verfahren nach dem vorhergehenden Anspruch, **dadurch gekennzeichnet, dass** während des Ausgleichsschritts eine identische Ausgleichskraft (F1, F2) für jede Formhälfte (21, 22) ausgeübt wird und eine Kraft zum Zurückstellen (E1) der Referenzformhälfte (21) in eine an dem oder den Referenzanschlägen (61) anliegende Position ausgeübt wird, wobei sich die Rückstellkraft (E1) von den Ausgleichskräften (F1, F2) unterscheidet.

10. Verfahren nach Anspruch 8, **dadurch gekennzeichnet, dass** während des Ausgleichsschritts:
- eine Ausgleichskraft (F1) für die Referenzformhälfte (21) ausgeübt wird;
- eine Ausgleichskraft (F2) für die zweite Formhälfte (22) ausgeübt wird,
wobei F2 > F1.

11. Verfahren nach dem vorhergehenden Anspruch, **dadurch gekennzeichnet, dass** während des Ausgleichsschritts:
- ein Fluid mit einem Druck (P1) in die dichte Kammer, als erste dichte Kammer (41) bezeichnet, die zwischen der Referenzformhälfte (21) und ihrem Träger (31) eingefügt ist, eingespritzt wird;
- ein Fluid mit einem Druck P2 in die dichte Kammer, als zweite dichte Kammer (42) bezeichnet, die zwischen der zweiten Formhälfte (22) und ihrem Träger (32) eingefügt ist, eingespritzt wird;
wobei P2 > P1.

## Claims

1. Device (1) for manufacturing a container by blow moulding or stretch blow moulding from a plastics blank, the device comprising:
- a mould (2) comprising two half-moulds (21, 22) which together define an impression (E) of the container to be formed;
- a support (31, 32) for each of the half-moulds (21, 22), each half-mould (21, 22) having a degree of travel with respect to its support (31, 32);
- means for compensating for a blowing pressure inside the mould (2);
the compensation means comprising:
- at least one sealed chamber (41, 42) interposed between each half-mould (21, 22) and its support (31, 32);
- means (43) for injecting a pressurized fluid into the sealed chambers (41, 42);
**characterized in that** it comprises a mechanism for the referential positioning of one of the half-moulds, referred to as reference half-mould (21), against at least one referential stop (61) borne by the support (31) of the reference half-mould (21), the referential stop or stops (61) tending to limit the movement of the reference half-mould (21) towards its support (31),
and means for holding the reference half-mould (21) in abutment against the referential stop or stops (61) while the other of the half-moulds, referred to as second half-mould (22), is movable under the action of the pressurized fluid.

2. Device (1) according to the preceding claim, **characterized in that**:
- the reference half-mould (21) has a compensation surface (S1) defined by the sealed chamber (41) interposed between the reference half-mould (21) and its support (31);
- the second half-mould (22) has a compensation surface (S2) defined by the sealed chamber (42) interposed between the second half-mould (22) and its support (32);
where S2 > S1.

3. Device (1) according to Claim 1, **characterized in that**:
- the reference half-mould (21) has a compensation surface (S1) defined by the sealed chamber (41) interposed between the reference half-mould (21) and its support (31);
- the second half-mould (22) has a compensation surface (S2) defined by the sealed chamber (42) interposed between the second half-mould (22) and its support (32);
where S2 = S1,
and **in that** the compensation surface (S1) of the reference half-mould (21) is symmetrical to the compensation surface (S2) of the second half-mould (22).

4. Device (1) according to any one of the preceding claims, **characterized in that** the injection means (43) are configured to:
- inject a fluid at a first pressure (P1) into the sealed chamber, referred to as first sealed chamber (41), interposed between the reference half-mould (21) and its support (31);
- inject a fluid at a second pressure (P2) into the sealed chamber, referred to as second sealed chamber (42), interposed between the second half-mould (22) and its support (32),
where P2 > P1.

5. Device (1) according to any one of Claims 1 to 3, **characterized in that** the injection means (43) are configured to:
- inject a fluid at a first pressure (P1) into the sealed chamber, referred to as first sealed chamber (41), interposed between the reference half-mould (21) and its support (31);
- inject a fluid at a second pressure (P2) into the sealed chamber, referred to as second sealed chamber (42), interposed between the second half-mould (22) and its support (32),
where P2 = P1.

6. Device (1) according to any one of the preceding claims, **characterized in that** the holding means comprise at least one elastic return member, referred to as first return member (71), for returning the reference half-mould (21) to a position pressed against its support (31).

7. Device (1) according to the preceding claim, **characterized in that** it comprises at least one elastic return member, referred to as second return member (72), for returning the second half-mould (22) against its support (32),
and **in that**:
- the first return member or members (71) exert a return force (E1);
- the second return member or members (72) exert a return force (E2),
where E1 > E2.

8. Method for manufacturing a container by blow-moulding or stretch-blow-moulding a plastics blank in a mould (2) comprising two half-moulds (21, 22) each borne by a support (31, 32), for each half-mould (21, 22) at least one sealed chamber (41, 42) being interposed between said half-mould (21, 22) and its support (31, 32),
the method comprising a step of compensating for a blowing pressure inside the mould (2),
wherein the compensation step consists in injecting a pressurized fluid into the sealed chambers (41, 42) in order to exert a compensation force, **characterized in that**, during the compensation step, one of the half-moulds, referred to as reference half-mould (21), adopts a reference spatial position, being in abutment against at least one referential stop (61) borne by the support (31) of the reference half-mould (21), while the other half-mould, referred to as second half-mould (22), is pressed against the reference half-mould (21).

9. Method according to the preceding claim, **characterized in that**, during the compensation step, an identical compensation force (F1, F2) is exerted for each half-mould (21, 22), and a return force (E1) for returning the reference half-mould (21) to a position in abutment against the referential stop or stops (61) is exerted, the return force (E1) being separate from said compensation forces (F1, F2).

10. Method according to Claim 8, **characterized in that**, during the compensation step:
- a compensation force (F1) is exerted for the reference half-mould (21);
- a compensation force (F2) is exerted for the second half-mould (22),
where F2 > F1.

11. Method according to the preceding claim, **characterized in that**, during the compensation step:
- a fluid under a pressure (P1) is injected into the sealed chamber, referred to as first sealed chamber (41), interposed between the reference half-mould (21) and its support (31);
- a fluid under a pressure P2 is injected into the sealed chamber, referred to as second sealed chamber (42), interposed between the second half-mould (22) and its support (32);
where P2 > P1.
